# EUROPEAN PATENT APPLICATION

(11) **EP 1 837 554 A2**
(43) Date of publication of application: **26.09.2007**
(21) Application number: 07006052.0
(22) Date of filing: 23.03.2007
(51) Int. Cl.: F16H 3/097

(54) **Dual clutch transmission apparatus**

(30) Priority: 23.03.2006 JP 2006080491
(71) Applicant: AISIN AI Co., Ltd., Nishio-shi, Aichi-ken (JP)
(72) Inventor: Hatori, Hiroki c/o AISIN AI Co., Ltd., Aichi-ken (JP); Ogami, Shiro c/o AISIN AI Co., Ltd., Aichi-ken (JP); Tanba, Toshio c/o AISIN AI Co., Ltd., Aichi-ken (JP); Kawamoto, Masaki c/o AISIN AI Co., Ltd., Aichi-ken (JP)
(74) Representative: Marshall, John Grahame

(57) **Abstract**

A dual clutch transmission apparatus includes: a first input shaft (15); a second input shaft (16) arranged in parallel with the first input shaft; a counter shaft (17) arranged in parallel with the first input shaft; a connecting clutch (35) adapted to establish or interrupt a transmitting path of rotation of the first input shaft to the output shaft; and a low/high shift stage switching mechanism (30) having a low-speed shift stage gear train (31a, 31b) and a high-speed shift stage gear train (32a, 32b), and a low/high shift stage switching clutch (33) switching the low-speed shift stage gear train and the high-speed shift stage gear train and changing a rotational speed of the counter shaft to a high or low rotational speed. Either the connecting clutch or the low/high shift stage switching mechanism is selected.

## Description

### FIELD OF THE INVENTION

The present invention is related to a dual clutch transmission apparatus.

### BACKGROUND

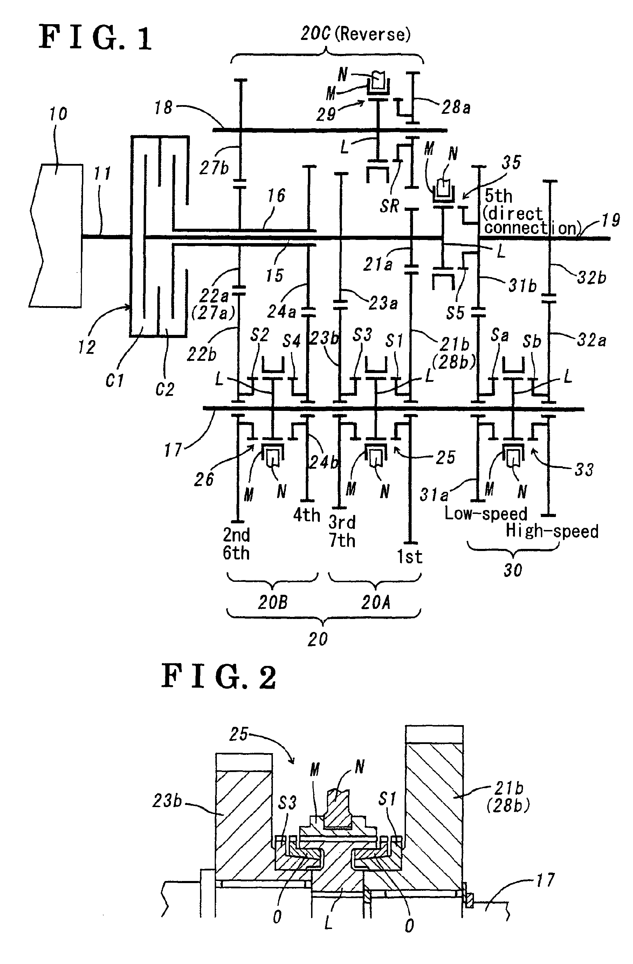

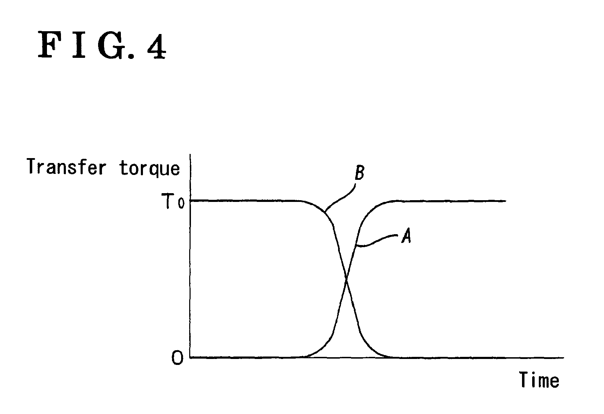

Automatic transmission apparatus for a vehicle have been widely known to be provided with a fluid-type torque converter. However, such fluid-type torque converter may suffer from slippages when transmitting power, leading to a loss of transmission efficiency. In light of the foregoing, automation of a transmission apparatus that includes a gear-type manual transmission has been suggested. JP2003-148602A (Reference 1, paragraphs 18-21, Fig. 2) discloses a dual clutch transmission apparatus having a dual clutch mechanism, i.e., having an automatic clutch mechanism of two frictional clutches that are engaged or disengaged in turns. In this dual clutch transmission apparatus, an input, which is transmitted from a drive shaft such as an output shaft of an engine, is first transmitted to a first input shaft via a first frictional clutch of the dual clutch mechanism, and then is transmitted to a second input shaft of a hollow shape. The second input shaft is arranged at a peripheral portion of the first input shaft so as to be coaxial with the first input shaft. The first frictional clutch is controlled to establish or interrupt a path for transmitting a torque A for example to the even gears (2nd, 4th and 6th), while the second frictional clutch is controlled to establish or interrupt a path for transmitting a torque B for example to the odd gears (1st, 3rd, 5th). As being explained in Fig. 4, the first and second frictional clutches of the dual clutch mechanism are controlled in a manner that 1) during a shift operation, when the torque A increases, the torque B decreases in contrast with the torque A, and vice versa; 2) after the shift operation, the torque A reaches the maximum torque value T0 and the torque B falls down to zero, and vice versa; and 3) when a rotational speed (rpm) of the engine is equal to or lower than a predetermined low rotational speed (rpm), the torque A and the torque B are both reduced. This dual clutch transmission apparatus includes a counter shaft arranged in parallel with the first and second input shafts. Arranged between the second input shaft and the counter shaft are multiple gear trains that are actuated to establish a 1 st shift stage, a 3rd shift stage and a 5th shift stage, respectively. Arranged between the first input shaft and the counter shaft are multiple gear trains that are actuated to establish a second shift stage, a fourth shift stage, a reverse shift stage and a low-speed shift stage for emergency. There are also four switching clutches housed in the transmission. The counter shaft is connected to an output shaft, which extends coaxially with the first input shaft in a rearward direction of the transmission, via a final transition gear train.

A controller of this dual clutch transmission apparatus controls the first friction clutch and the second frictional clutch to be engaged or disengaged in turns. The operations of the first and second frictional clutches are responsive to a condition of a vehicle, such as an accelerator opening degree, an engine rotational speed (rpm), a speed of the vehicle, or the like. When the second frictional clutch is controlled to an engaged state, one of the 1 st, 3rd and 5th shift stages is selected and power transmission in accordance with the selected shift stage is implemented. When the first frictional clutch is controlled to an engaged state, one of the 2nd shift stage, the 4th shift stage, the reverse shift stage and the low-speed shift stage for emergency is selected and power transmission in accordance with the selected shift stage is implemented. For example, when the condition of the vehicle matches a driving of a vehicle at the 2nd shift stage, the controller selects the gear train for the 2nd shift stage and the first frictional clutch so that a driving of a vehicle at the 2nd shift stage is achieved. When the condition of the vehicle matches a driving of a vehicle at the 3rd shift stage for example with an accelerator opening degree increased, the controller selects the gear train for the 3rd shift stage and the second frictional clutch so that the driving of the vehicle at the 2nd shift stage is changed to a driving of the vehicle at the 3rd shift stage. Likewise, the controller selects either the first frictional clutch or the second frictional clutch in turns as well as selecting a gear train appropriate to a condition of a vehicle, wherein the vehicle drives at a shift stage appropriate to a condition of the vehicle. When a speed of a vehicle declines while a vehicle is in motion at the 1 st shift stage, the controller selects the gear train for the low-speed shift stage for emergency and the first frictional clutch so that a driving mode of a vehicle is changed to a low-speed driving mode for emergency/a low-speed shift stage for emergency. Described above is relevant to a driving of a vehicle with a shift lever located for a vehicle forward movement. Once the shift lever is located for a vehicle rearward movement in a situation where the vehicle is stationary, the controller selects the gear train for the reverse shift stage and the first frictional clutch so that the vehicle moves rearward.

In the dual clutch transmission apparatus disclosed in Reference 1, the output shaft is arranged on the same axis as the first input shaft, and is applicable for the use in a front-engine and rear-drive type vehicle (FR vehicle). JP2006-002789 (Reference 2, paragraphs 3-9, Fig. 8) discloses a dual clutch transmission apparatus with a dual clutch mechanism, which apparatus is applicable for use in a front-engine and front-drive type vehicle (FF vehicle). The dual clutch transmission apparatus (Reference 2) is different from the aforementioned apparatus (Reference 1) in which that, in the dual clutch transmission (Reference 2), a first intermediate shaft and a second intermediate shaft are arranged in parallel with first and second input shafts. Mounted between the first input shaft and the first and second intermediate shafts is a first gear change mechanism having plural gear trains for the 1 st shift stage, the 3rd shift stage, the 5th shift stage and the seventh shift stage. Mounted between the second input shaft and the first and second intermediate shafts is a second gear change mechanism having plural gear trains for the 2nd shift stage, the 4th shift stage and the 6th shift stage. Mounted between the first input shaft and the second intermediate shaft is a gear train for the reverse shift stage.

According to the apparatus disclosed in Reference 1, mounted on the two input shafts, the output shaft and the counter shaft are the eight gear trains for the 1 st shift stage, the 2nd shift stage, the 3rd shift stage, the 4th shift stage, the 5th shift stage, the low-speed shift stage for emergency, the reverse shift stage and the final transmitting gear train, and the four switching clutches. These components are all arranged in series along the axis. As a result, the length of the axis of the gearbox is enlarged, and the number of gears is increased with respect to the number of shift stages. Mores specifically, the total amount of the gears is seventeen with respect to the six forward and single reverse shift stages. Meanwhile, in the apparatus disclosed in Reference 2, mounted on the two input shafts, the single output shaft and the two intermediate shafts arranged in parallel therewith are nine gear trains for the 1 st shift stage, the 2nd shift stage, the 3rd shift stage, the 4th shift stage, the 5th shift stage, the 6th shift stage, the 7th shift stage, the reverse shift stage and the final transmitting gear train, and the four switching clutches. The components, which are partially arranged in parallel, are all arranged along in series along the axis. As a result, although the length of the axis of the gearbox is shortened, the number of gears is still large with respect to the number of shift stages. More specifically, the total quantity of the gears is nineteen with respect to the seven forward and single reverse shift stages.

In the light of the foregoing, it is possible to achieve a dual clutch-type gear change mechanism, which has the less number of gear trains, and behind which a low/high shift stage switching mechanism is provided. The low/high shift stage switching mechanism is configured to selectively establish a low shift stage and a high shift stage. According to this dual clutch-type gear change mechanism, a shift operation is performed by controlling the low/high shift stage switching mechanism to establish a low-speed shift stage during a lower half of the entire range of shift stages, and a shift operation is performed by controlling the low/high shift stage switching mechanism to establish a high-speed shift stage during a higher half of the entire range of the shift stages. In this case, a single dual clutch-type gear change mechanism is shared by the low-speed shift stage and the high-speed shift stage. As a result, the number of gears to be employed can be reduced with respect to the number of shift stages.

In the dual clutch transmission apparatus, gear trains for the 1 st shift stage, 3rd shift stage and so on are arranged on a torque transmitting path established by the first frictional clutch, and gear trains for the 2nd shift stage, the 4th shift stage and so on are arranged on a torque transmitting path established by the second frictional clutch. When a shift operation is performed to change a current shift stage to the next shift stage, one of the first and second frictional clutches are engaged and the other one is disengaged, and the shift operation is performed in a situation where the first and second frictional clutches are both in the disengaged states (clutch disengagement). Accordingly, the shift operation is smoothly completed. However, according to the dual clutch-type gear change mechanism having the low/high shift stage switching mechanism at the rear portion thereof, it is necessary to change the switching clutch of the low/high shift stage switching mechanism from the low-speed shift stage side to the high-speed shift stage side, for the purpose of switching a shift operation within a low-speed range to a shift operation within a high-speed range.

In order to shift from the low-speed range to the high-speed range, the switching clutch of the low/high shift stage switching mechanism has to be disengaged from the low-speed side and be engaged with the high-speed side in a situation where a transfer torque is zero with one of the first and second frictional clutches being engaged. However, in the dual clutch mechanism, which exhibits a torque-transmitting characteristic as depicted in Fig. 4, it is not easy to obtain such aforementioned timing. As a result, torque transmitting may be discontinued and a smooth shift operation is interrupted.

The present invention has been made in view of the above circumstances and provides a dual clutch transmission apparatus, in which an intermediate shift stage is provided between a low-speed range, and a high-speed range, of a low/high shift stage switching mechanism. While this intermediate shift stage is selected, a connecting clutch of the low/high shift stage switching mechanism transmits rotation of a first input shaft to an output shaft of the transmission.

### SUMMARY OF THE INVENTION

According to an aspect of the present invention, a dual clutch transmission apparatus includes: a first input shaft; a second input shaft arranged in parallel with the first input shaft; a counter shaft arranged in parallel with the first input shaft; a drive shaft connected to a power source and rotatably transmitted with power of the power source; a dual clutch mechanism detachably connecting the drive shaft to the first input shaft and the second input shaft, the dual clutch mechanism having a first clutch transmitting rotation of the drive shaft to the first input shaft and a second clutch transmitting rotation of the drive shaft to the second input shaft; a gear change mechanism mounted on the counter shaft, the first input shaft or the second input shaft; an output shaft transmitted with rotation of the counter shaft; a connecting clutch adapted to establish or interrupt a transmitting path of rotation of the first input shaft to the output shaft; and a low/high shift stage switching mechanism having a low-speed shift stage gear train and a high-speed shift stage gear train, each mounted on the counter shaft and the output shaft, the low/high shift stage switching mechanism further having a low/high shift stage switching clutch selectively switching the low-speed shift stage gear train and the high-speed shift stage gear train and changing a rotational speed of the counter shaft to a high or low rotational speed, wherein the high or low rotational speed is transmitted to the output shaft. Either the connecting clutch or the low/high shift stage switching mechanism is selected.

The gear change mechanism, which utilizes the dual clutch mechanism, is shared by the low-speed shift stage and the high-speed shift stage. As a result, the less number of gears are employed with respect to the number of shift stages, which leads to a compact dual clutch transmission apparatus.

When the highest speed shift stage within the low speed range or the lowest speed shift stage within the high speed range is switched to the intermediate shift stage within the shift range, torque transmission is changed from the switching clutch of the low/high shift stage switching mechanism to the connecting clutch. Here, the change between the connecting clutch and the switching clutch is implemented where transfer torque via the first and second clutches equals zero prior to the change of the dual clutch mechanism.

To the contrary, when intermediate shift stage is switched to the highest speed shift stage within the low speed range or to the lowest speed shift stage within the high speed range, torque transmission is changed from the connecting clutch to the switching clutch of the low/high shift stage switching mechanism. Here, the change between the switching clutch and the connecting clutch is implemented where transfer torque via the first and second clutches equals zero prior to the change of the dual clutch mechanism.

In any event, the disengagement and engagement of the switching clutch and the connecting clutch are all implemented where transfer torque via the corresponding frictional clutch of the dual clutch mechanism equals zero. Therefore, disconnection of the transfer torque does not occur and a smooth shift operation is implemented.

Further, the first input shaft and the output shaft are arranged coaxially with each other. The connecting clutch suffices as a member for establishing or interrupting a path for transmitting rotation of the first input shaft to the output shaft. That is, other members or mechanism are not required and the structure of the dual clutch transmission is simplified.

Still further, the first input shaft and the output shaft are arranged coaxially with each other. Therefore, a dead space is reduced, which leads to a further compact dual clutch transmission apparatus.

### BRIEF DESCRIPTION OF THE DRAWINGS

The foregoing and additional features and characteristics of the present invention will become more apparent from the following detailed description considered with reference to the accompanying drawings, wherein:

Fig. 1 is a view schematically illustrating an entire structure of a dual clutch transmission apparatus according to a first embodiment of the present invention;

Fig. 2 is a sectional view illustrating an example of a switching clutch according to the first embodiment;

Fig. 3 is a table explaining a shift operation according to the first embodiment of the present invention;

Fig. 4 is a diagram for explaining an operation of a dual clutch mechanism used for a dual clutch-type transmission apparatus;

Fig. 5 is a view schematically illustrating an entire structure of a dual clutch transmission apparatus according to a second embodiment of the present invention; and

Fig. 6 is a table explaining a shift operation according to the first embodiment of the present invention;

### DETAILED DESCRIPTION

Embodiments of the present invention are explained with reference to the attached drawing figures. According to a first embodiment of the present invention, the present invention is applied to a dual clutch transmission apparatus for seven forward shift stages and two reverse shift stages. The dual clutch transmission apparatus according to the first embodiment includes a first input shaft 15, a second input shaft 16 rotatably surrounding the first input shaft 15 and having the same axis as the first input shaft 15, a counter shaft 17 and a counter shaft 18 arranged in parallel with the first input shaft 15 and the second input shaft 16. The first input shaft 15 penetrates through the second input shaft 16 of hollow shaped and extends in a rearward direction (the right side in Fig. 1). The counter shaft 18 is employed for establishing a reverse shift stage. The dual clutch transmission apparatus further includes an output shaft 19 being coaxial with the first input shaft 15 and extending in the rearward direction.

The dual clutch transmission apparatus still further includes a dual clutch mechanism 12 structured with a first frictional clutch (first clutch) C1 and a second frictional clutch (second clutch) C2 rotatably actuated by a power source 10, such as an engine, via a drive shaft 11. The first input shaft 15, which is connected to the first frictional clutch C1, is rotatably driven in response to the operation of the first frictional clutch C1. The second input shaft 16, which is connected to the second frictional clutch C2, is rotatably driven in response to the operation of the second frictional clutch C2. The first frictional clutch C1 is controlled to establish or interrupt a path for transmitting a torque A for example to the odd gears (1 st, 3rd, 5th and 7th), while the second frictional clutch C2 is controlled to establish or interrupt a path for transmitting a torque B for example to the even gears (2nd, 4th and 6th). As being explained in Fig. 4, under normal operating conditions, the first and second frictional clutches C1 and C2 of the dual clutch mechanism 12 are controlled in a manner that 1) during a shift operation, when the torque A increases, the torque B decreases in contrast with the torque A; 2) after the shift operation, the torque A reaches the maximum predetermined torque value T0 and the torque B falls down to zero, and vice versa; and 3) when a rotational speed (rpm) of the engine 10 is equal to or lower than a predetermined low rotational speed (rpm), the torque A and the torque B are both reduced.

Mounted on the first input shaft 15, the second input shaft 16, and the counter shaft 17 is a gear change mechanism 20. The gear change mechanism 20 is structured with a first forward-shift-stage gear change mechanism 20A, mounted between the first input shaft 15 and the counter shaft 17, and a second forward-shift-stage gear change mechanism 20B, mounted between the second input shaft 16 and the counter shaft 17. A connecting clutch 35 is arranged between the first input shaft 15 and the output shaft 19 arranged coaxial with each other and connects or disconnects the shafts 15 and 19. Mounted on the counter shaft 17 and the output shaft 19 is a low/high shift stage switching mechanism 30. Mounted on the first input shaft 15, the second input shaft 16, and a reverse shift stage counter shaft 18 is a reverse shift stage gear mechanism 20C.

The first forward-shift-stage gear change mechanism 20A includes a 1st shift stage gear train 21a, 21b, a 3rd shift stage gear train 23a, 23b, and a first switching clutch 25. The 1 st shift stage gear train is configured with a driving gear 21 a firmly attached to the first input shaft 15 and a driven gear 21b freely rotatably mounted on the counter shaft 17. The 3rd shift stage gear train is configured with a driving gear 23a firmly attached to the first input shaft 15 and a driven gear 23b freely rotatably mounted on the counter shaft 17.

As illustrated in Fig. 1 and Fig. 2, the first switching clutch 25 is a synchronizer mechanism incorporating therein a clutch hub L spline-engaged with the counter shaft 17, a 1st shift stage engaging member S1 press-fitted with the 1st shift stage driven gear 21b, a 3rd shift stage engaging member S3 press-fitted with the 3rd shift stage driven gear 23b, a synchronizer ring O interposed between the clutch hub L and each of the shift stage engaging members S 1 and S2, and a sleeve M spline-engaged with an outer periphery of the clutch hub L so as to be movable in an axial direction. The first switching clutch 25 is configured so as to connect in turns either the driven gear 21b or 23b to the counter shaft 17 or to simultaneously disconnect both of the driven gears 21b and 23b therefrom. The sleeve M of the first forward-shift-stage gear change mechanism 20A, when being located at a neutral position illustrated in Fig. 1, is not engaged with the engaging members S1 and S3. Once the sleeve M of the first forward-shift-stage gear change mechanism 20A is shifted towards the 1st shift stage driven gear 21 b by a shift fork N fixed with its bifurcated section into a peripheral annular-shaped groove of the sleeve M, the sleeve M is first spline-engaged with the synchronizer ring O at the side of the 1st shift stage driven gear 21b, wherein rotation of the counter shaft 17 is synchronized with rotation of the the 1st shift stage driven gear 21b. The sleeve M is then spline-engaged with peripheral teeth of the 1 st shift stage engaging member S1, wherein the counter shaft 17 is connected integrally with the 1 st shift stage engaging member S1 so as to establish the 1 st shift stage. Meanwhile, once the sleeve M of the first forward-shift-stage gear change mechanism 20A is shifted towards the 3rd shift stage driven gear 23b by the shift fork N, rotation of the counter shaft 17 is synchronized with rotation of the 3rd shift stage driven gear 23b, and then the counter shaft 17 is connected integrally with the 3rd shift stage driven gear 23b so as to establish the 3rd shift stage.

The second forward-shift-stage gear change mechanism 20B includes a 2nd shift stage gear train 22a, 22b, a 4th shift stage gear train 24a, 24b, and a second switching clutch 26. The 2nd shift stage gear train is configured with a driving gear 22a firmly attached to the second input shaft 16 and a driven gear 22b freely rotatably mounted on the counter shaft 17. The 4th shift stage gear train is configured with a driving gear 24a firmly attached to the second input shaft 16 and a driven gear 24b freely rotatably mounted on the counter shaft 17. The second switching clutch 26 is a synchronizer mechanism configured so as to connect in turns either the driven gear 22b or 24b to the counter shaft 17 or to simultaneously disconnect both of the driven gears 22b and 24b therefrom. The structure of the second switching clutch 26 is identical to the one of the first switching clutch 25, except that the a 2nd shift stage engaging member S2 and a 4th shift stage engaging member S4 are fixed to the driven gear 22b and the driven gear 24b, respectively. Likewise as the first switching clutch 25, the second switching clutch 26, when being located at a neutral position illustrated in Fig. 1, is engaged with none of the engaging members S2 and S4. Once a sleeve M of the second forward-shift-stage gear change mechanism 20B is shifted towards the 2nd shift stage driven gear 22b by a shift fork N fixed with its bifurcated section into a peripheral annular-shaped groove of the sleeve M, rotation of the counter shaft 17 is synchronized with rotation of the 2nd shift stage driven gear 22b, and the counter shaft 17 is connected integrally with the 2nd shift stage driven gear 22b so as to establish the 2nd shift stage. Meanwhile, once a sleeve M of the second forward-shift-stage gear change mechanism 20B is shifted towards the 4th shift stage driven gear 24b by the shift fork N, rotation of the counter shaft 17 is synchronized with rotation of the 4th shift stage driven gear 24b, and then the counter shaft 17 is connected integrally to the 4th shift stage driven gear 24b so as to establish the 4th shift stage. According to the first embodiment, the switching clutches 25 and 26 of the gear change mechanisms 20A and 20B are provided at the counter shaft 17, and however can be provided at the side of the first input shaft 15 or the second input shaft 16.

The reverse shift stage gear mechanism 20C includes the aforementioned reverse shift stage counter shaft 18, a first reverse shift stage gear train 27a, 27b, a second reverse shift stage gear train 28a, 28b and a reverse shift stage clutch 29. The first reverse shift stage gear train is configured with a driving gear 27a (shared by the 2nd shift stage driven gear 22a) firmly attached to the second input shaft 16 and a driven gear 27b firmly attached to the reverse shift stage counter shaft 18. The second reverse shift stage gear train is configured with a driving gear 28a freely rotatably mounted on the reverse shift stage counter shaft 18 and a driven gear 28b (shared by the 1 st shift stage driven gear 21 b) freely rotatably mounted on the counter shaft 17. The reverse shift stage clutch 29 is a synchronizer mechanism that connects the driving gear 28a to the reverse shift stage counter shaft 18 or disconnects it therefrom. The structure of the reverse shift stage clutch 29 is similar to the one of the first switching clutch 25, except that, in the reverse shift stage clutch 29, a synchronizer ring O and a reverse shift stage engaging member SR are provided only at one side of a clutch hub L of the reverse shift stage clutch 29 and none of them is provided at the other side. The clutch hub L is secured to the reverse shift stage counter shaft 18, and the reverse shift stage engaging member SR is fixedly mounted to the reverse shift stage driving gear 28a.

The low/high shift stage switching mechanism 30 includes a low-speed shift stage gear train 31a, 31b, a high-speed shift stage gear train 32a, 32b, and a low/high shift stage switching clutch 33. The low-speed shift stage gear train is configured with a driving gear 31 a freely rotatably mounted on the counter shaft 17 and a driven gear 31 b firmly attached to a distal end of the output shaft 19. The high-speed shift stage gear train is configured with a driving gear 32a freely rotatably mounted on the counter shaft 17 and a driven gear 32b firmly attached to the output shaft 19. The low/high shift stage switching clutch 33 is a synchronizer mechanism that connects in turns either the driving gear 31 a or 32a to the counter shaft 17 or simultaneously disconnects both of the driving gears 31a and 32a therefrom. The low/high shift stage switching clutch 33 has the structure identical to the one of each switching clutch 25 and 26, except that, in the low/high shift stage switching clutch 33, a low-speed shift stage engaging member Sa and a high-speed shift stage engaging member Sb are secured to the driving gear 31a and the driving gear 32a, respectively. The low/high shift stage switching clutch 33, when being located at a neutral position in Fig. 1, is engaged with none of the engaging members Sa and Sb. Once a sleeve M is shifted towards the driving gear 31a by a shift fork N, rotation of the counter shaft 17 is synchronized with rotation of the driving gear 31 a, and the counter shaft 17 is integrally connected with the driving gear 31 a. As a result, a low-speed shift stage is established in the transmission. Once the sleeve M is shifted towards the driving gear 32a, rotation of the counter shaft 17 is synchronized with rotation of the driving gear 32a, and the counter shaft 17 is connected integrally with the driving gear 32a. As a result, a high-speed shift stage is established in the transmission.

The connecting clutch 35 is arranged between a rear end of the first input shaft 15 and the low-speed shift stage driven gear 31b secured to a front end of the output shaft 19. The connecting clutch 35 is a synchronizer mechanism having the structure similar to the one of the reverse shift stage clutch 29, and a synchronizer ring and an engaging member are provided at one side of the connecting clutch 35. A clutch hub L is firmly attached to the rear end of the first input shaft 15, and a 5th shift stage engaging member S5 is fixed to the low-speed shift stage driven gear 31b. The connecting clutch 35, when being located at the neutral position in Fig. 1, is not engaged with the 5th shift stage engaging member S5. Once a sleeve M is shifted towards the low-speed shift stage driven gear 31b by a shift fork N, rotation of the first input shaft 15 is synchronized with rotation of the output shaft 19, and the first input shaft 15 is connected directly to the output shaft 19. As a result, a 5th shift stage is established in the transmission.

According to the first embodiment, the number of teeth of each gear employed to establish either the shift stage, the reverse shift stage, the low-speed shift stage or the high-speed shift stage is designed so as to set a speed change ratio for each shift stage at a predetermined value. During the 5th shift stage, because the first input shaft 15 is connected directly to the output shaft 19, a speed change ratio for the 5th shift stage is 1.

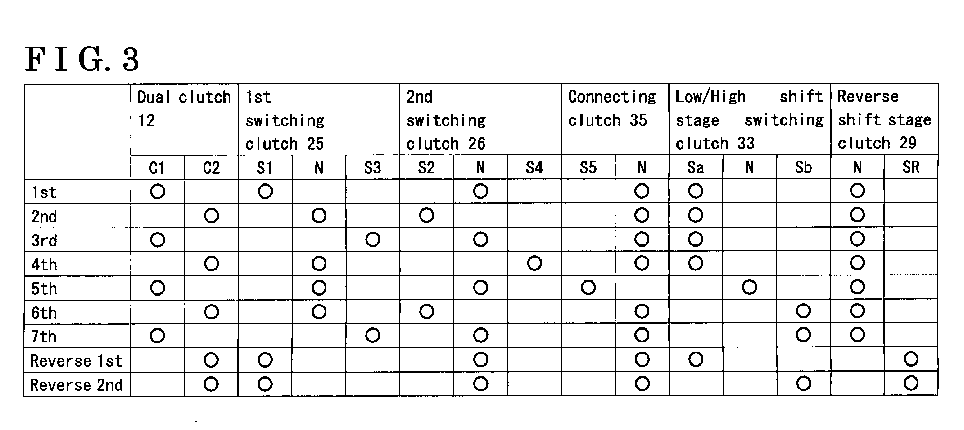

The controller of the dual clutch transmission apparatus according to the first embodiment controls, as being summarized in Fig. 3, the first and second frictional clutches C1 and C2 of the dual clutch mechanism 12, the first switching clutch 25, the second switching clutch 26, the reverse shift stage clutch 29, the low/high shift stage switching clutch 33 and the connecting clutch 35. These components are each controlled being responsive to an operation condition of a vehicle, such as an accelerator opening degree, a rotational speed (rpm) of an engine, a speed of the vehicle, or the like. When being at non-operated states, the first and second frictional clutches C1 and C2 of the dual clutch mechanism 12, are both at disengaged states, and the clutches 25, 26, 29, 33 and 35 are all positioned at neutral positions. In a situation where a vehicle has stopped with a shift lever (not illustrated) being located at a forward shift range and with the engine 10 being activated, the controller selects the low-speed shift stage gear train 31a, 31b of the low/high shift stage switching mechanism 30 and the first shift stage gear train 21a, 21b of the first forward-shift-stage gear change mechanism 20A 1) with the low-speed shift stage engaging member Sa being engaged with the sleeve M of the low/high shift stage switching clutch 33; 2) with the 1 st shift stage engaging member S1 being engaged with the sleeve M of the first switching clutch 25; and 3) with the other clutches being at the neutral positions. When an actual rotational speed (rpm) of the engine 10 exceeds a predetermined low rotational speed in response to an increase in an accelerator opening degree, the controller gradually increases an engagement force of the first frictional clutch C1 of the dual clutch mechanism 12 in accordance with an amount of an accelerator opening degree. Accordingly, driving torque of the drive shaft 11 is transmitted from the first frictional clutch C1 to the output shaft 19 via the first input shaft 15, the 1 st shift stage gear train 21 a, 21 b, the first switching clutch 25, the counter shaft 17, the low/high shift stage switching clutch 33 and the low-speed shift stage gear train 31a, 31b, wherein the vehicle starts driving at the 1 st shift stage (low rotational speed).

For example, when the operation condition of the vehicle matches a driving of a vehicle at the 2nd shift stage for example because of an increase in an accelerator opening degree, the controller leaves the low-speed shift stage engaging member Sa of the low/high shift stage switching clutch 33 at the engaged state. The controller first engages the 2nd shift stage engaging member S2 with the sleeve M of the second switching clutch 26. Here, a gear-transmission path for the 2nd shift stage is established in the gearbox. Sequentially, the controller switches the clutch being engaged from the first frictional clutch C1 to the second frictional clutch C2 at the dual clutch mechanism 12, wherein the 2nd shift stage is established in the transmission. The controller then disengages the 1st shift stage engaging member S 1 from the 1 st shift stage drive gear 21 b. As described above, according to the first embodiment, the 2nd shift stage is established in the transmission with a combination of the components as being summarized in Fig. 3.

Likewise, concerning a driving of the vehicle at the 3rd and 4th shift stages, the low-speed shift stage engaging member Sa of the low/high shift stage switching clutch 33 remains at the engaged state, and each gear train, which matches an operation condition of the vehicle, is selected. In this case, either the first frictional clutch C1 or the second frictional clutch C2 is selected in turns so as to achieve a driving of a vehicle at a shift stage appropriate to the actual driving condition of the vehicle.

When the operation condition of the vehicle matches a driving of the vehicle at the 5th shift stage, the controller 1) first engages the 5th shift stage engaging member S5 with the sleeve M of the connecting clutch 35 so that the first input shaft 15 is connected to the output shaft 19; 2) next switches the clutch being engaged from the second frictional clutch C2 to the first frictional clutch C1, wherein the 5th shift stage is established in the transmission. The controller then disengages the 4th shift stage engaging member S4 and the low-speed shift stage engaging member Sa. Accordingly, the 5th shift stage is established in the gearbox with a combination of the components as being summarized in Fig. 3. When the operation condition of the vehicle matches a driving of the vehicle at the 6th shift stage, the controller 1) first engages the high-speed shift stage engaging member Sb with the sleeve M of the low/high shift stage switching clutch 33, and engages the 2nd shift stage engaging member S2 with the sleeve M of the second switching clutch 26. Here, a gear-transmission path for the 6th shift stage is established in the gearbox. Sequentially, the controller switches the clutch being engaged from the first frictional clutch C1 to the second frictional clutch C2 at the dual clutch mechanism 12, wherein the 6th shift stage is established in the transmission. The controller then disengages the 5th shift stage engaging member S5. Accordingly, the 6th shift stage is established in the gearbox with a combination of the components as being summarized in Fig. 3. In this case, driving torque of the drive shaft 11 is transmitted from the second frictional clutch C2 to the output shaft 19 via the second input shaft 16, the 2nd shift stage gear train 22a, 22b, the 2nd shift stage engaging member S2 of the second switching clutch 26, the counter shaft 17, the high-speed shift stage engaging member Sb of the low/high shift stage switching clutch 33 and the high-speed shift stage gear train 32a, 32b, wherein the vehicle drives at the 6th shift stage (high rotational speed).

When the operation condition of the vehicle matches a driving of the vehicle at the 7th shift stage, the controller 1) first engages the 3rd shift stage engaging member S3 with the sleeve M of the first switching clutch 25 with the high-speed shift stage engaging member Sb remained at the engaged state. Here, a gear-transmission path for the 7th shift stage is established in the gearbox. The controller then changes the clutch being engaged from the second frictional clutch C2 to the first frictional clutch C1 at the dual clutch mechanism 12, wherein the 7th shift stage is established in the transmission. The controller then disengages the 2nd shift stage engaging member S2. Accordingly, the 7th shift stage is established in the gearbox with a combination of the components as being summarized in Fig. 3. Under the 6th and 7th shift stages, a rotational speed of the output shaft 19 becomes greater than the one of the drive shaft 11. Once an operation condition of a vehicle matches a driving at a low-speed shift stage because a speed of the vehicle reduces while the vehicle is running at a certain shift stage, the controller selects the gear train for a low-speed shift stage in accordance with an operation condition of a vehicle and selects either the first frictional clutch C1 or the second frictional clutch C2 in turns. As a result, a vehicle can travel at a shift stage appropriate to the operation condition of the vehicle.

As described above, concerning the operation of the gear change mechanism 20, in a situation where either the first frictional clutch C1 or the second frictional clutch C2 is selected, the switching clutch 25 or 26, which is operatively associated with the non-selected clutch C1 or C2, is selected to be engaged. In such circumstances, because transfer torque from the non-selected clutch C1 or C2 equals zero, a shift operation for each shift stage in the transmission is smoothly implemented. Concerning the operations of the connecting clutch 35 and the low/high shift stage switching clutch 33, when an actual shift stage is changed from the 4th shift stage (the highest shift stage within a low speed range) or from the 6th shift stage (the lowest shift stage within a high speed range) to the 5th shift stage (intermediate shift stage), the 5th shift stage engaging member S5 is engaged where the first frictional clutch C1 is at the disengaged state prior to the changing of the dual clutch mechanism 12. The low-speed shift stage engaging member Sa or the high-speed shift stage engaging member Sb is disengaged in a situation where the second frictional clutch C2 is at the disengaged state after the changing of the dual clutch mechanism 12. In other words, the engagement of the engaging member S5 and the disengagement of the engaging member Sa or Sb are each implemented where transfer torque from the corresponding frictional clutch C1 or C2 is zero. Likewise, when the 5th shift stage is changed to the 4th shift stage or to the 6th shift stage, the low-speed shift stage engaging member Sa or the high-speed shift stage engaging member Sb is engaged in a situation where the second frictional clutch C2 is at the disengaged state prior to the changing of the dual clutch mechanism 12. The 5th shift stage engaging member S5 is disengaged in a situation where the first frictional clutch C1 is at the disengaged state after the changing of the dual clutch mechanism 12. In other words, the engagement of the engaging member Sa or Sb and the disengagement of the engaging member S5 are each implemented where transfer torque from the corresponding frictional clutch C 1 or C2 is zero. Therefore, a shift operation at each shift stage is smoothly achieved.

Once a shift lever of the dual clutch transmission apparatus is located to a reverse shift range in a situation where the vehicle has stopped with the engine 10 being activated, the controller detects the aforementioned state of the vehicle and engages the reverse shift stage engaging member SR of the reverse shift stage clutch 29, the low-speed shift stage engaging member Sa of the low/high shift stage switching clutch 33, and the 1 st shift stage engaging member S1 of the first switching clutch 25. The controller further controls the other clutches to put into the neutral positions. Accordingly, two gear-transmission paths are established, one is for the low-speed shift stage at the low/high shift stage switching mechanism 30 and the other one is for the reverse shift stage at the gear change mechanism 20, as being summarized in Fig. 3. Once a rotational speed (rpm) of the engine 10 exceeds a predetermined low rotational speed in response to an increase in an accelerator opening degree, the controller gradually increases an engagement force of the second frictional clutch C2 of the dual clutch mechanism 12 in accordance with an amount of the accelerator opening degree. Accordingly, driving torque of the drive shaft 11 is transmitted from the second frictional clutch C2 to the output shaft 19 via the second input shaft 16, the first reverse shift stage gear train 27a, 27b, the reverse shift stage counter shaft 18, the second reverse shift stage gear train 28a, 28b, the first switching clutch 25, the counter shaft 17, the low/high shift stage switching clutch 33 and the low-speed shift stage gear train 31a, 31b. As a result, a vehicle starts traveling at the reverse first shift stage.

When the condition of the vehicle matches a driving of the vehicle at the reverse 2nd shift stage, the controller changes the component being engaged with the sleeve M at the low/high shift stage switching clutch 33 from the low-speed shift stage engaging member Sa to the high-speed shift stage engaging member Sb, as being summarized in Fig. 3. As a result, driving torque is transmitted not via the low-speed shift stage gear train 31a, 31b but via the high-speed shift stage gear train 32a, 32b, in which the reverse 2nd shift stage is established. In the shift operation from the reverse 1 st shift stage to the reverse 2nd shift stage, the operation at the dual clutch mechanism 12 is not changed. Therefore, the transmission path via the low-speed shift stage gear train 31a, 31b is switched to the transmission path via the high-speed shift stage gear train 32a, 32b, in a situation where transfer torque via the dual clutch mechanism 12 is maintained at the maximum value T0. Therefore, torque transmission from the engine 10 to the output shaft 19 is occasionally discontinued, which hinders a smooth shift operation. However, when a vehicle travels in a rearward direction, an accelerator opening degree is not increased so that transfer torque itself if small. In such circumstances, the possible disconnection of torque transmission substantially makes no difference.

As described above, according to the first embodiment, the low/high shift stage switching mechanism 30 is provided behind the gear change mechanism 20 that utilizes the dual clutch mechanism 12. The gear change mechanism 20 is shared by the low-speed shift stage, and the high-speed shift stage, of the low/high shift stage switching mechanism 30. Therefore, it is possible to reduce the number of gears with respect to the number of shift stages, which leads to obtaining a compact dual clutch transmission apparatus.

In such dual clutch transmission apparatus arranging the low/high shift stage switching mechanism 30 behind the dual clutch-type gear change mechanism 20, a smooth shift operation may be occasionally hindered in a case where an actual shift stage in the gearbox is shifted from a low-speed range to a high-speed range, as described above. According to the first embodiment, however, when the highest-speed shift stage in the low-speed range (a range of shift stages lower than the intermediate shift stage) or the lowest-speed shift stage in the high-speed range (a range of shift stages higher than the intermediate shift stage) is changed to an intermediate shift stage in the entire range of the shift stages, the torque transmission path is switched from the low/high shift stage shifting clutch 33 to the connecting clutch 35. In this case, the engagement of the connecting clutch 35 and the disengagement of the low/high shift stage switching clutch 33 are implemented while the frictional clutches C1 and C2 are at the disconnected states, respectively, i.e., are implemented while transfer torque equals zero via the frictional clutches C1 and C2, respectively. In this case, disconnection of torque transmission does not occur so that a smooth shift operation is performed. To the contrary, when the intermediate shift stage within the entire speed range is changed to the lowest-speed shift stage in the high-speed range or the highest-speed shift stage in the low-speed range, the torque transmission path is switched from the connecting clutch 35 to the low/high shift stage shifting clutch 33. In this case, the engagement of the low/high shift stage switching clutch 33 and the disengagement of the connecting clutch 35 are implemented while the frictional clutches C2 and C1 are at the disconnected states, respectively, i.e., are implemented while transfer torque equals zero via the frictional clutches C2 and C1, respectively. In this case, disconnection of torque transmission does not occur so that a smooth shift operation is performed.

According to the above-described embodiment, the first input shaft 15 and the output shaft 19 are arranged coaxially with each other. Under this shaft arrangement, the connecting clutch 35 suffices as a member, which establishes or interrupts a path for transmitting rotation of the first input shaft 15 to the output shaft 19, and other components such as gears or clutches are not needed, both which leads to a simple structure of the dual clutch transmission. However, the present invention is not limited to the above, and the first input shaft 15 and the output shaft 19 can be arranged in an eccentric manner relative to each other. The first input shaft 15 and the output shaft 19 are connected to each other via a gear interposed therebetween. Here, too, a smooth shift operation is not hindered upon a shift operation from a shift stage within a low-speed range to a shift stage within a high-speed range, in the dual clutch transmission apparatus having the low/high shift stage switching mechanism 30 behind the gear change mechanism 20.

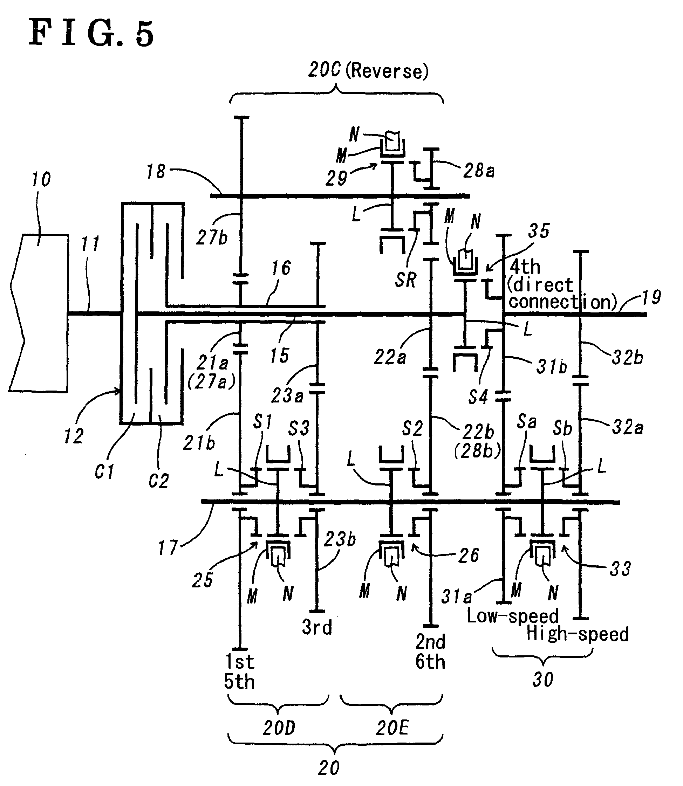

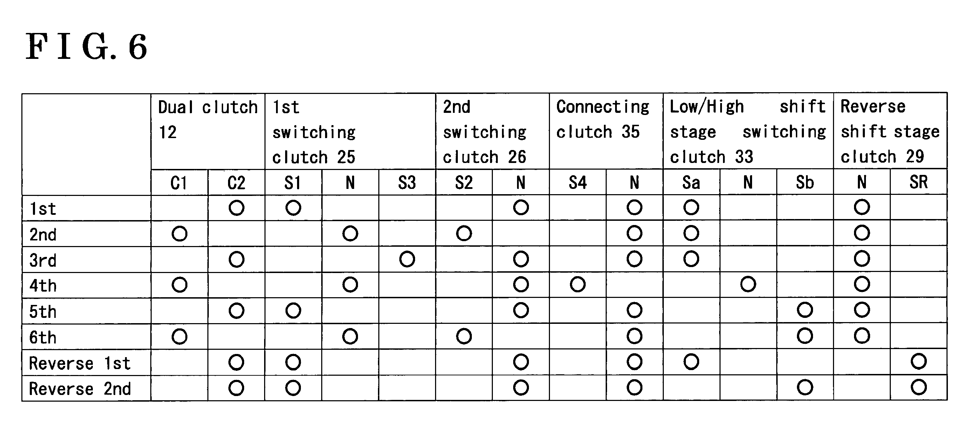

According to the above first embodiment, the 5th shift stage corresponds to the intermediate shift stage, in which the first input shaft 15 and the output shaft 19 are connected to each other via the connecting clutch 35. The 1st, 2nd, 3rd and 4th shift stages are each established by the gear change mechanism 20 with the low-speed shift stage selected at the low/high shift stage switching mechanism 30. The 6th and 7th shift stages are ach established by the gear change mechanism 20 with the high-speed shift stage selected at the low/high shift stage switching mechanism 30. The present invention is, however, not limited to the above, and other shift stages can be set as the intermediate shift stage. A second embodiment of the present invention is illustrated in Figs. 5 and 6. Fig. 5 illustrates a dual clutch transmission apparatus according to the second embodiment. Here, for the 1st, 2nd and 3rd shift stages, the low/high shift stage switching mechanism 30 is operated to select the low-speed shift stage, for the 5th and 6th shift stages, the low/high shift stage switching mechanism 30 is operated to select the high-speed shift stage, and the 4th shift stage is set as the intermediate shift stage established by a direct-connection.

According to the second embodiment, to the contrary to the first embodiment, a first forward-shift-stage gear change mechanism 20D of the gear change mechanism 20 is provided between the second input shaft 16 and the counter shaft 17, and a second forward-shift-stage gear change mechanism 20E of the gear change mechanism 20 is provided between the first input shaft 15 and the counter shaft 17. The first forward-shift-stage gear change mechanism 20D is different from the first forward-shift-stage gear change mechanism 20A of the first embodiment only in that the driving gear 21 a of the 1 st shift stage gear train and the driving gear 23a of the 3rd shift stage gear train are fixedly mounted on the second input shaft 16. The second forward-shift-stage gear change mechanism 20E is different from the second forward-shift-stage gear change mechanism 20B of the first embodiment in that: 1) the second forward-shift-stage gear change mechanism 20E does not include the 4th shift stage gear train 24a, 24b and includes only the 2nd shift stage gear train 22a, 22b; 2) the driving gear 22a is fixedly mounted on the first input shaft 15; and 3) the second switching clutch 26 includes the synchronizer ring O and the engaging member S2 only at the left side of the 2nd shift stage gear train, i.e., at the same side as the reverse shift stage clutch 29 relative to the reverse shift stage gear train 28a. The other structure of the dual clutch transmission apparatus according to the second embodiment is the same as the one of the first embodiment and the description thereof will be omitted herein.

According to the second embodiment, the controller of the dual clutch transmission apparatus controls the frictional clutches C1, C2, the first switching clutch 25, the second switching clutch 26, the connecting clutch 35, the low/high shift stage switching mechanism 33 and the reverse shift stage clutch 29, as being summarized in Fig. 6. These components are responsive to an operation condition of a vehicle, such as an accelerator opening degree, a rotational speed (rpm) of the engine 10, a speed of the vehicle, or the like. According to the second embodiment, the 4th shift stage is the intermediate shift stage in which the first input shaft 15 and the output shaft 19 are connected to each other via the connecting clutch 35. The 1st, 2nd and 3rd shift stages are each selected by the gear change mechanism 20 with the low-speed shift stage selected at the low/high shift stage switching mechanism 30. The 5th and 6^{th} shift stages are each selected by the gear change mechanism 20 with the high-speed shift stage at the low/high shift stage switching mechanism 30. The other operations can be known easily from the above-described operations of the first embodiment, and the description thereof will be omitted herein.

According to the second embodiment, here too, the low/high shift stage switching mechanism 30 is provided behind the single gear change mechanism 20 that utilizes the dual clutch mechanism. The single gear change mechanism 20 is shared by the low-speed shift stage, and the high-speed shift stage, of the low/high shift stage switching mechanism 30. As a result, the less number of gears are provided in the gearbox with respect to the number of shift stages, which leads to a compact dual clutch transmission apparatus. Therefore, on the same reasons as the first embodiment, a smooth shift operation is achieved also when shifting between a shift stage within a low-speed range and a shift stage within a high-speed range. Further, the second forward-shift-stage gear change mechanism 20E according to the second embodiment does not require a gear train, a synchronizer ring and an engaging member at one side, so that the dual clutch transmission apparatus is simplified.

As described above, the number of shift stages of the second embodiment is less than the one of the first embodiment. However, the present invention is applied to the dual clutch transmission apparatus in which the number of shift stages is greater than the above described. In order to apply the present invention to such dual clutch transmission apparatus, the first forward-shift-stage gear change mechanism 20A and the second forward-shift-stage gear change mechanism 20B are arranged in parallel, and the number of shift stages, which are established in the gear change mechanism 20, is increased.

The principles, of the preferred embodiment and mode of operation of the present invention have been described in the foregoing specification. However, the invention, which is intended to be protected, is not to be construed as limited to the particular embodiment disclosed. Further, the embodiment described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims, be embraced thereby.

## Claims

1. A dual clutch transmission apparatus, comprising:
a first input shaft (15);
a second input shaft (16) arranged in parallel with the first input shaft (15);
a counter shaft (17) arranged in parallel with the first input shaft (15);
a drive shaft (11) connected to a power source (10) and rotatably transmitted with power of the power source (10);
a dual clutch mechanism (12) detachably connecting the drive shaft (11) to the first input shaft (15) and the second input shaft (16), the dual clutch mechanism (12) having a first clutch (C1) transmitting rotation of the drive shaft (11) to the first input shaft (15) and a second clutch (C2) transmitting rotation of the drive shaft (11) to the second input shaft (16);
a gear change mechanism (20) mounted on the counter shaft (17), the first input shaft or the second input shaft;
an output shaft (19) transmitted with rotation of the counter shaft (17);
a connecting clutch (35) adapted to establish or interrupt a transmitting path of rotation of the first input shaft to the output shaft; and
a low/high shift stage switching mechanism (30) having a low-speed shift stage gear train (31a, 31b) and a high-speed shift stage gear train (32a, 32b), each mounted on the counter shaft and the output shaft, the low/high shift stage switching mechanism (30) further having a low/high shift stage switching clutch (33) selectively switching the low-speed shift stage gear train and the high-speed shift stage gear train and changing a rotational speed of the counter shaft (17) to a high or low rotational speed, wherein the high or low rotational speed is transmitted to the output shaft (19),
wherein either the connecting clutch (35) or the low/high shift stage switching mechanism (30) is selected.

2. A dual clutch transmission apparatus according to claim 1, wherein 1), while an intermediate shift stage within an entire range of shift stages, is selected, rotation of the drive shaft (11) is transmitted to the output shaft (19) via the first clutch (C1) being engaged, the first input shaft (15) and the connecting clutch (35) being engaged; 2) within a range of shift stages lower than the intermediate shift stage, the rotation of the drive shaft (11) is transmitted to the output shaft (19) via the gear change mechanism (20) and the low/high shift stage switching mechanism (30) selecting, therein, the low-speed shift stage gear train; and 3) within a range of shift stages higher than the intermediate shift stage, the rotation of the drive shaft (11) is transmitted to the output shaft (19) via the gear change mechanism (20) and the low/high shift stage switching mechanism (30) selecting, therein, the high-speed shift stage gear train.

3. A dual clutch transmission apparatus according to claim 2, wherein the high rotational speed is defined within the range of the shift stages higher than the intermediate shift stage, and the low rotational speed is defined within the range of the shift stages lower than the intermediate shift stage.

4. A dual clutch transmission apparatus according to claim 1, wherein the first input shaft and the output shaft are arranged coaxially with each other.

5. A dual clutch transmission apparatus according to claims 4, wherein, the second input shaft is of hollow shaped and the first input shaft penetrates the hollow second input shaft to be coaxial with the second input shaft.

6. A dual clutch transmission apparatus according to claim 2, wherein the intermediate shift stage is a 5th shift stage.

7. A dual clutch transmission apparatus according to claim 2, wherein the intermediate shift stage is a 4th shift stage.

8. A dual clutch transmission apparatus according to claim 1, wherein the connecting clutch connects the first input shaft to the output shaft directly.

9. A dual clutch transmission apparatus according to claim 1, wherein either the connecting clutch or the low/high shift stage switching mechanism is selected in accordance with a condition of a vehicle.

10. A dual clutch transmission apparatus according to claim 1, wherein the condition of the vehicle is at least an accelerator opening degree, an engine rotational speed (rpm) or a speed of the vehicle.
